# EUROPÄISCHE PATENTSCHRIFT

(11) **EP 0 898 476 B1**
(45) Veröffentlichungstag und Bekanntmachung des Hinweises auf die Patenterteilung: **14.06.2000**
(21) Anmeldenummer: 97916340.9
(22) Anmeldetag: 12.03.1997
(51) Int. Cl.: A61J 3/07, B65B 1/36

(54) **VORRICHTUNG ZUM ABFÜLLEN VON PULVER IN HARTGELATINEKAPSELN ODER DERGLEICHEN**
DEVICE FOR DECANTING POWDER INTO HARD GELATIN CAPSULES OR THE LIKE
DISPOSITIF POUR REMPLIR DE POUDRE DES CAPSULES DE GELATINE DURE OU SIMILAIRES

(30) Priorität: 07.05.1996 DE 19618237
(43) Veröffentlichungstag der Anmeldung: 03.03.1999
(73) Patentinhaber: ROBERT BOSCH GMBH, 70442 Stuttgart (DE)
(72) Erfinder: WURST, Reiner, D-71549 Auenwald (DE); KRIEGER, Eberhard, D-71384 Weinstadt (DE); KUHNLE, Manfred, D-71409 Schwaikheim (DE); RUNFT, Werner, D-71364 Winnenden (DE)
(86) Internationale Anmeldenummer: DE9700474
(87) Internationale Veröffentlichungsnummer: WO9741821

(56) Entgegenhaltungen:
- DE-A- 2 322 028
- FR-A- 2 502 004
- US-A- 2 315 866
- US-A- 5 082 032

## Beschreibung

Die Erfindung geht aus von einer Vorrichtung zum Abfüllen von Pulver in Hartgelatinekapseln oder dergleichen nach der Gattung des Anspruchs 1. Eine derartige Vorrichtung ist aus der DE 23 46 070 A1 bekannt. Die bekannte Vorrichtung weist zum Verändern der Volumina von Pulverpreßlingen Stifte auf, die in Bohrungen einer taktweise umlaufenden Dosierscheibe eintauchen. Die Pulverpreßlinge werden mit Hilfe von ersten Stempeln von einer Füllscheibe in die Dosierscheibe eingeschoben, und die entsprechend der Eintauchtiefe der Stifte überstehenden Abschnitte der Pulverpreßlinge beim Weiterdrehen der Füllscheibe abgeschert. Zum Überschieben der Pulverpreßlinge in die bereitgestellten Kapselunterteile mittels zweiter Stempel werden die Stifte zuvor aus den Bohrungen der Dosierscheibe herausgefahren. Bei der ansonsten zufriedenstellend arbeitenden Vorrichtung kann es bei bestimmten Pulverarten dazu kommen, daß es aufgrund der abgescherten Pulverpreßlinge zu einer unerwünschten Inhomogenität des Pulvers in der Füllscheibe kommt. Weiterhin ist eine aufwendige Konstruktion und genaue Fertigung der Vorrichtung erforderlich, da die Stifte vor dem Übergeben der Pulverpreßlinge an die Kapselunterteile jedes Mal aus den Bohrungen der Dosierscheibe herausgefahren und anschließend wieder eintauchen müssen, und aus
Funktionsgründen nur ein geringer Spalt zwischen den Stiften und den Bohrungen in der Dosierscheibe zulässig ist.

Aufgabe der Erfindung ist es, die Inhomogenitäten des Pulvers in der Füllscheibe beim Betrieb einer gattungsgemäßen Vorrichtung zu verringern und gleichzeitig eine möglichst einfache Konstruktion der Vorrichtung zu erzielen.

Diese Aufgabe wird durch die kennzeichnenden Merkmale des Anspruchs 1 gelöst.

Weitere Vorteile und vorteilhafte Weiterbildungen der erfindungsgemäßen Vorrichtung zum Abfüllen von Pulver in Hartgelatinekapseln oder dergleichen ergeben sich aus den Unteransprüchen und der Beschreibung. Ein einfacheres Überschieben und unbeschädigte Pulverpreßlinge während des Einschiebens in die Kapselunterteile werden dadurch erreicht, daß die Oberseiten der Hülsen bündig mit dem Boden der Dosierscheibe abschließen, so daß die Pulverpreßlinge beim Überschieben nicht über einen Absatz geschoben werden müssen. Besonders vorteilhaft ist es weiterhin, Einstellmittel vorzusehen, die zum Verändern der Volumina der Preßlinge mit der Dosierscheibe zusammenwirken. In diesem Fall ist unabhängig von dem eingestellten Volumina keine Verstellung des die Kapselunterteile aufnehmenden Übernahmerades erforderlich.

### Zeichnung

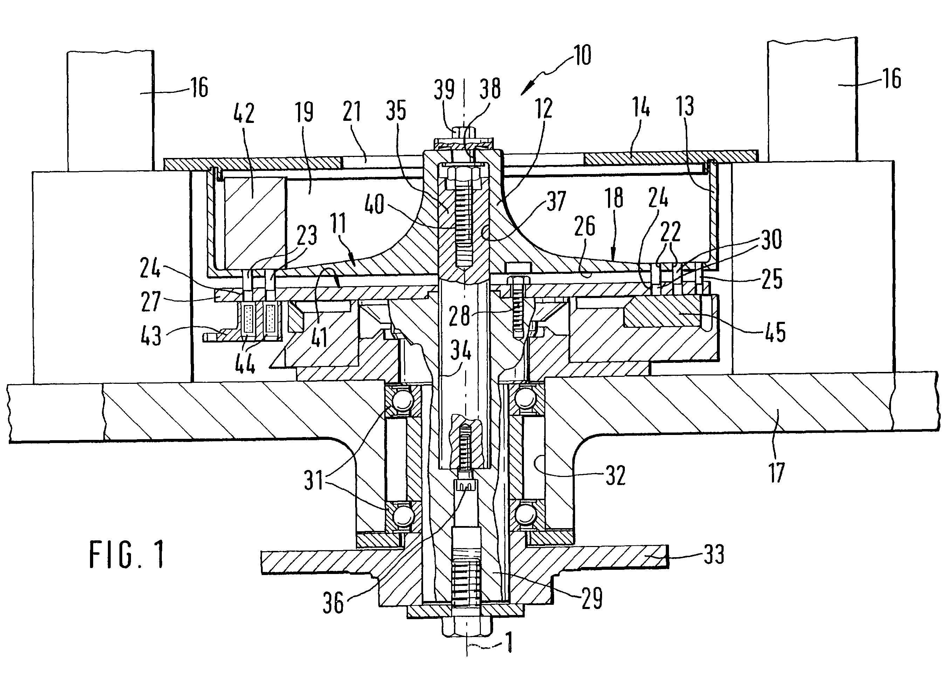

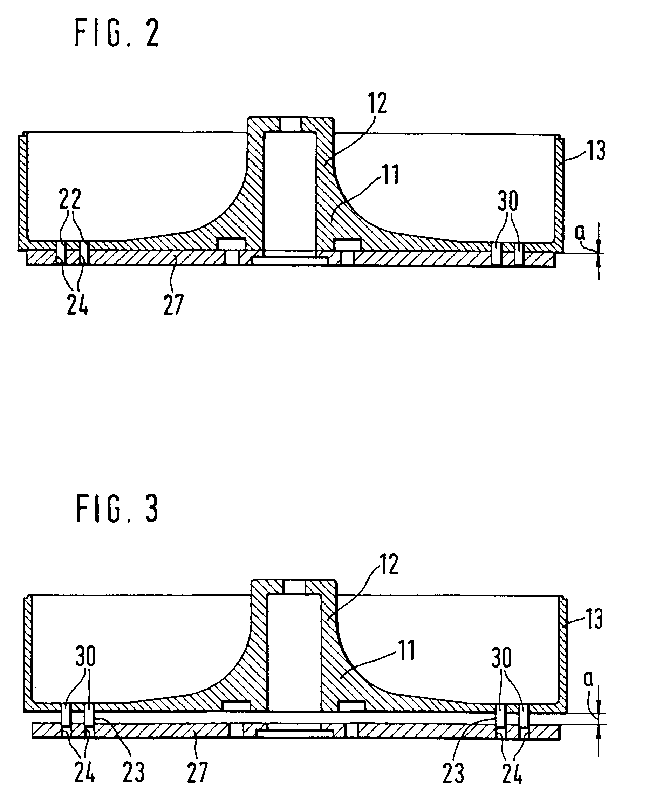

Ein Ausführungsbeispiel der Erfindung ist in der Zeichnung dargestellt und wird in der nachfolgenden Beschreibung näher erläutert. Es zeigen die Figur 1 eine Vorrichtung zum Abfüllen von Pulver in Hartgelatinekapseln oder dergleichen in einem Längsschnitt, und die Figuren 2 und 3 einen Teil der Vorrichtung nach Figur 1 bei zwei Endpositionen der Distanzscheibe im Längsschnitt.

### Beschreibung des Ausführungsbeispiels

Die in der Figur 1 dargestellte Vorrichtung 10 zum Abfüllen von Pulver in Hartgelatinekapseln oder dergleichen hat eine um eine Drehachse 1 schrittweise umlaufende, im wesentlichen topfförmige Dosierscheibe 11 mit einem in der Drehachse 1 angeordneten Nabenbereich 12 und einer am Umfang der Dosierscheibe 11 ausgebildeten, umlaufenden Seitenwand 13. Die offene obere Stirnseite der Dosierscheibe 11 ist mit einem Deckel 14 abgedeckt, der an zwei Säulen 16 befestigt ist. Die Säulen 16 sind auf einem die Vorrichtung 10 tragenden Tisch 17 angeordnet. Von dem Boden 18 der Dosierscheibe 11, der Unterseite des Deckels 14 sowie der Seitenwand 13 und dem Nabenbereich 14 wird ein Speicherraum 19 für das Pulver ausgebildet. Zum Nachfüllen des Pulvers in den Speicherraum 19 weist der Deckel 14 eine mittig angeordnete Öffnung 21 auf. Im Boden 18 der Dosierscheibe 11 sind mehrere Gruppen von ersten Bohrungen 22 ausgebildet, in die Hülsen 23 fest eingesetzt sind. Die oberen Stirnseiten der Hülsen 23 schließen mit dem Boden 18 der Dosierscheibe 11 bündig ab. Die Hülsen 23 ragen zumindest teilweise in zweite Bohrungen 24 einer parallel zur ebenen Unterseite 26 der Dosierscheibe 11 angeordneten Distanzscheibe 27. Die Distanzscheibe 27 und die Dosierscheibe 11 sind mittels eines im Boden 18 im Bereich der Seitenwand 13 angeordneten Stiftes 25 drehfest miteinander verbunden. Von den Hülsen 23 und den zweiten Bohrungen 24 werden Volumina 30 ausgebildet, die zum Formen von nicht dargestellten Pulverpreßlingen mittels an sich bekannter, im Speicherraum 19 angeordneter, und in der Zeichnung nicht dargestellter, auf- und abbewegbarer Stopfstempel in Stopfstationen dienen.

Die Distanzscheibe 27 ist mittels einer Schraubverbindung 28 mit einem Wellenstummel 29 drehfest verbunden. Der Wellenstummel 29 ist mit zwei Lagerkörpern 31 in einer in dem Tisch 17 ausgebildeten Aufnahme 32 drehbar gelagert. An dem der Distanzsscheibe 27 gegenüberliegenden Ende ist der Wellenstummel 29 mit einem Antriebsrad 33 verbunden, das beispielsweise mit einem nicht dargestellten Antrieb, beispielsweise einem Schritt- oder Servomotor, gekoppelt ist.

Fluchtend zur Drehachse 1 ist auf der dem Antriebsrad 33 entgegengesetzten Stirnseite des Wellenstummels 29 eine weitere Bohrung 34 ausgebildet, in die ein zylindrisches Zwischenstück 35 eingesetzt ist. Das Zwischenstück 35 ist im Wellenstummel 29 mittels einer Schraube 36 axial fixiert. Das Zwischenstück 35 durchdringt die Distanzscheibe 27, und ragt in eine im Nabenbereich 12 der Dosierscheibe 11 mittig ausgebildete Bohrung 37, die der axialen Führung der Dosierscheibe 11 auf dem Zwischenstück 35 dient.

Im Grund der Bohrung 37 ist ein Loch 38 vorgesehen, durch das eine mit dem Nabenbereich 12 und der Dosierscheibe 11 verbundene Einstellschraube 39 ragt. Die Einstellschraube 39 greift in eine im Wellenstück 35 ausgebildete Gewindebohrung 40. Mittels der Einstellschraube 39 ist der Abstand a zwischen der Unterseite 26 der Dosierscheibe 11 und der Oberseite 41 der Distanzscheibe 27 zwischen zwei Endpositionen stufenlos veränderbar. In der einen Endlage (Figur 2) liegt die Dosierscheibe 11 auf der Distanzscheibe 27 auf, der Abstand a beträgt Null. Infolgedessen nehmen die von den Hülsen 23 und den zweiten Bohrungen 24 ausgebildeten Volumina 30 für die Preßlinge ein Minimum an. In der anderen Endlage (Figur 3), in der der Abstand a so groß ist, daß die Hülsen 23 gerade noch ein Stück in die zweiten Bohrungen 24 ragen, nehmen die Volumina 30 ihr Maximum an.

Die Vorrichtung 10 wird vervollständigt durch die bereits erwähnten, nicht dargestellten, im Speicherraum 19 angeordneten und mit den Säulen 16 verbundenen Stopfstationen zum Einpressen des Pulvers in die Volumina 30, einen im Speicherraum 19 angeordneten Pulverabweiser 42, eine ebenfalls nicht dargestellte Übergabestation zum Überschieben der geformten Preßlinge in bereitgestellte Kapselunterteile und ein unterhalb der Distanzscheibe 27 angeordnetes Übernahmerad 43.

Das Übernahmerad 43, dessen Drehachse parallel mit der Drehachse 1 der Dosierscheibe 11 ausgerichtet ist, weist eine der Anzahl der zweiten Bohrungen 24 entsprechende Zahl an Kapselaufnahmen 44 für die Kapselunterteile auf, wobei die Kapselaufnahmen 44 fluchtend mit den zweiten Bohrungen 24 angeordnet sind. In dem nicht vom Übernahmerad 43 überdeckten Bereich der Unterseite 26 der Distanzscheibe 27 ist zumindest deckend mit den zweiten Bohrungen 24 und in möglichst geringem Abstand zur Distanzscheibe 27 ein als Gegenlager für die Stopfstempel dienender Andrückring 45 angeordnet.

Die Wirkungsweise der Vorrichtung 10 ist an sich bekannt, und wird deshalb nur kurz erläutert: Die sich schrittweise drehende Dosierscheibe 11 kommt jeweils in den Bereichen der Stopfstationen zum Stillstand. Dort wird Pulver mittels der Stopfstempel in die von den Hülsen 23 und den zweiten Bohrungen 24 ausgebildeten Volumina 30 gepresst. Dieser Vorgang wiederholt sich bei jeder der beispielsweise insgesamt vier Stopfstationen, so daß in den Volumina 30 Preßlinge aus Pulver gebildet werden, die in die in den Kapselaufnahmen 44 des Übernahmerads 43 bereitgestellten Kapselunterteile überschoben werden. Die Kapselunterteile werden während der weiteren Drehung des Übernahmerads 43 in einer Verschließstation mit den Kapseloberteilen verschlossen.

Das entsprechend der Größe der Kapselunterteile bzw. Kapseln mögliche Volumen der Preßlinge läßt sich mittels des Abstandes a zwischen der axial ortsfesten Dosierscheibe 11 und der Distanzscheibe 27 über die Einstellschraube 39 einstellen.

## Patentansprüche

1. Vorrichtung zum Abfüllen von Pulver in Hartgelatinekapseln oder dergleichen, mit einer schrittweise um eine senkrechte Drehachse (1) umlaufenden, durch Seitenwände (13) einen Speicherraum (19) für das Pulver ausbildenden Dosierscheibe (11), deren Boden (18) das Pulver aufnehmende erste Bohrungen (22) aufweist, in denen das Pulver mittels Stopfstempeln zu Preßlingen geformt wird, mit Mitteln zum Einstoßen der Preßlinge in unterhalb der Dosierscheibe (11) bereitgestellte Kapselunterteile und mit Mitteln zum Verändern der Volumina der Preßlinge, dadurch gekennzeichnet, daß die Mittel zum Verändern der Volumina (30) ein mit der Dosierscheibe (11) synchron umlaufendes, scheibenförmiges Element (27) umfassen, das zwischen der Dosierscheibe (11) und den bereitgestellten Kapselunterteilen angeordnet ist und das zweite Bohrungen (24) aufweist, die mit den ersten Bohrungen (22) in der Dosierscheibe (11) ausgerichtet sind, daß ein zwischen der Dosierscheibe (11) und dem Element (27) in Richtung der Drehachse (1) veränderlicher Abstand (a) einstellbar ist und daß in den zueinander ausgerichteten ersten und zweiten Bohrungen (22, 24) jeweils eine in diese zumindest teilweise eintauchende Hülse (23) angeordent ist, die den Abtand (a) zwischen den ersten und zweiten Bohrungen (22, 24) zu überbrücken vermag.

2. Vorrichtung nach Anspruch 1, dadurch gekennzeichnet, daß die Hülsen (23) in dem Boden (18) der Dosierscheibe (11) fixiert sind, und daß die der Dosierscheibe (11) zugewandten Stirnflächen der Hülsen (23) bündig mit der Oberseite des Bodens (18) der Dosierscheibe (11) abschließen.

3. Vorrichtung nach Anspruch 1 oder 2, dadurch gekennzeichnet, daß der Abstand (a) zwischen der Dosierscheibe (11) und dem Element (27) durch Einstellmittel (39) veränderbar ist, die auf die Dosierscheibe (11) einwirken.

4. Vorrichtung nach einem der Ansprüche 1 bis 3, dadurch gekennzeichnet, daß das Element (27) drehfest mit einer Antriebswelle (29) verbunden ist, und daß die Dosierscheibe (11) axial verschiebbar auf einer mit der Antriebswelle (29) verbundenen Achse (35) angeordnet ist.

5. Vorrichtung nach Anspruch 4, dadurch gekennzeichnet, daß die Dosierscheibe (11) und das Element (27) mittels eines als Drehsicherung wirkenden, beide (11, 27) zumindest teilweise durchdringenden, parallel zur Drehachse (1) angeordneten Stiftes (25) verbunden sind.

## Claims

1. Device for dispensing powder into hard gelatin capsules or the like, having a metering disc (11) which revolves in steps about a vertical axis of rotation (1) and by means of side walls (13) forms a storage chamber (19) for the powder, the bottom (18) of which metering disc has first bores (22) which receive the powder and in which the powder is formed into compacts by means of plugging rams, having means for ejecting the compacts into capsule lower parts provided beneath the metering disc (11), and having means for altering the volume of the compacts, characterized in that the means for altering the volume (30) comprise a disc-like element (27) which revolves synchronously with the metering disc (11), is arranged between the metering disc (11) and the provided capsule lower parts and has second bores (24), which are aligned with the first bores (22) in the metering disc (11), in that a variable distance (a) can be set between the metering disc (11) and the element (27) in the direction of the axis of rotation (1), and in that in each case one sleeve (23) is arranged in the first and second bores (22, 24), which are respectively aligned with respect to one another, which sleeve penetrates at least partially into the said bores and is able to bridge the distance (a) between the first and second bores (22, 24).

2. Device according to Claim 1, characterized in that the sleeves (23) are fixed in the bottom (18) of the metering disc (11), and in that the end faces, facing the metering disc (11) of the sleeves (23) end flush with the top side of the bottom (18) of the metering disc (11).

3. Device according to Claim 1 or 2, characterized in that the distance (a) between the metering disc (11) and the element (27) can be altered by setting means (39) which act on the metering disc (11).

4. Device according to one of Claims 1 to 3, characterized in that the element (27) is connected in a rotationally fixed manner to a drive shaft (29), and in that the metering disc (11) is arranged axially displaceably on a pin (35) which is connected to the drive shaft (29).

5. Device according to Claim 4, characterized in that the metering disc (11) and the element (27) are connected by means of a peg (25) which acts as a protection against rotation, penetrates at least partially through both (11, 27) and is arranged parallel to the axis of rotation (1).

## Revendications

1. Dispositif de remplissage de poudre dans des capsules de gélatine dure ou similaires, comprenant un disque de dosage (11) qui tourne pas à pas autour d'un axe de rotation vertical (1), et qui constitue au moyen de parois latérales (13) un espace de stockage de la poudre (19), disque de dosage (11) dont le fond (18) présente des premiers alésages (22) qui reçoivent la poudre, alésages dans lesquels la poudre prend la forme de comprimés au moyen de poinçons de bourrage, comprenant des moyens servant à enfoncer les comprimés dans des parties inférieures de capsules préparées en dessous du disque de dosage (11), et des moyens pour faire varier le volume des comprimés,
caractérisé en ce que
• les moyens servant à faire varier le volume (30) comprennent un élément (27) en forme de rondelle qui tourne de façon synchrone avec le disque de dosage (11), et qui est disposé entre le disque de dosage (11) et les parties inférieures préparées des capsules et qui présente des seconds alésages (24), qui sont alignés avec les premiers alésages (22) dans le disque de dosage (11),
• on peut régler une distance (a) dans le sens de l'axe (1) entre le disque de dosage (11) et l'élément (27) et
• on dispose dans les premiers et les seconds alésages (22, 24) alignés les uns par rapport aux autres respectivement une douille (23), qui plonge dans ceux-ci, au moins en partie, douille (23) qui permet de couvrir la distance (a) entre les premiers et les seconds alésages (22, 24).

2. Dispositif selon la revendication 1,
caractérisé en ce que
• les douilles (23) sont fixées dans le fond (18) du disque de dosage (11) et
• les faces frontales des douilles (23), qui sont tournées vers le disque de dosage (11), viennent à fleur avec le côté supérieur du fond (18)du disque de dosage (11).

3. Dispositif selon la revendication 1 ou 2,
caractérisé en ce que
la distance (a), comprise entre le disque de dosage (11) et l'élément (27) peut être modifiée par des moyens de réglage (39) qui agissent sur le disque de dosage (11).

4. Dispositif selon l'une des revendications 1 à 3,
caractérisé en ce que
• l'élément (27) est relié de façon solidaire en rotation à un arbre d'entraînement (29), et
• le disque de dosage (11) est disposé axialement de façon à pouvoir coulisser sur un axe (35) relié à l'arbre d'entraînement (29) .

5. Dispositif selon la revendication 4,
caractérisé en ce que
le disque de dosage (11) et l'élément (27) sont reliés au moyen d'une broche (25) qui fait office de moyen de blocage en rotation, qui passe au moins en partie à travers les deux pièces (11, 27) et qui est disposée parallèlement à l'axe de rotation (1).
